# EUROPÄISCHE PATENTSCHRIFT

(11) **EP 0 968 056 B1**
(45) Veröffentlichungstag und Bekanntmachung des Hinweises auf die Patenterteilung: **24.04.2002**
(21) Anmeldenummer: 98907947.0
(22) Anmeldetag: 15.01.1998
(51) Int. Cl.: B01J 31/22, C08F 10/00

(54) **NICHT SELBSTENTZÜNDLICHER FESTSTOFF**
NON SELF-IGNITING SOLID
MATIERE SOLIDE NON SPONTANEMENT INFLAMMABLE

(30) Priorität: 31.01.1997 DE 19703502
(43) Veröffentlichungstag der Anmeldung: 05.01.2000
(73) Patentinhaber: BASF AKTIENGESELLSCHAFT, 67056 Ludwigshafen (DE)
(72) Erfinder: KRISTEN, Marc, Oliver, D-67117 Limburgerhof (DE); MÜLLER, Patrik, D-67663 Kaiserslautern (DE); MOLL, Ulrich, D-67487 St Martin (DE); KÖLLE, Peter, D-67098 Bad Dürkheim (DE)
(86) Internationale Anmeldenummer: EP9800200
(87) Internationale Veröffentlichungsnummer: WO9833591

(56) Entgegenhaltungen:
- WO-A-95/07939
- WO-A-96/14155
- DE-A- 19 606 166
- US-A- 4 794 098
- US-A- 5 616 665

## Beschreibung

Die vorliegende Erfindung betrifft die Verwendung eines Feststoffs, der nicht selbstentzündlich ist, enthaltend:
a) mindestens eine Trägerkomponente,
b) mindestens eine, für sich selbstentzündliche, chemische Verbindung,
c) mindestens eine inerte Flüssigkeit und
d) gegebenenfalls weitere Komponenten, zur katalytischen oder Stöchiometrischen Kohlenstoff-Kohlenstoff-Bindungsverknüpfung oder zur Hydrierung oder zur Trocknung von Fluiden.

Weiterhin betrifft die vorliegende Erfindung Verfahren zur Herstellung eines nicht selbstentzündlichen Feststoffs zur eingangsgenannten Verwendung.

Es ist seit langem bekannt, und häufig auch gewünscht, reaktive, chemische Verbindungen an Trägermaterialien chemisch oder physikalisch zu fixieren und somit ihre Eignung für bestimmte chemische Verfahren zu verbessern. Großtechnisch wichtige chemische Verfahren sind beispielsweise die Polymerisation, die Hydrierung oder auch die Trocknung von Fluiden, beispielsweise Flüssigkeiten oder Gase.

Beispielsweise in Polymerisationsverfahren, insbesondere bei der Polyolefinherstellung, werden feste, trägerfixierte Ziegler-Phillips- oder Metallocenkatalysatorsysteme verwendet. Diesen Katalysatoren ist gemeinsam, daß sie im allgemeinen pyrophore Bestandteile enthalten, die dazu führen, daß die Katalysatoren sich selbst entzünden können, insbesondere unter oxidierenden Bedingungen, beispielsweise bei Luftzutritt.

Die Selbstentzündlichkeit der, exemplarisch an Polyolefinkatalysatoren demonstrierten, Feststoffe erschwert oder verhindert gar deren Einsatz in großtechnischen Prozessen, da besondere, oft teure und technisch aufwendige Schutzmaßnahmen für ein gefahrloses Arbeiten nötig sind.

Zusätzlich schränkt die Einstufung dieser Feststoffe, insbesondere der Polyolefinkatalysatoren, als selbstentzündliche Substanzen deren Transport stark ein; beispielsweise ist ein schneller Versand per Luftfracht nicht erlaubt.

WO 95/07939, WO 87/03889, WO 93/23439 und WO 94/28034 lehren die Herstellung von trägerfixierten Metallocenkatalysatoren in Suspension, anschließende Entfernung des Lösungsmittels und Trocknung des Feststoffs unter Erhalt eines frei fließenden Katalysators. WO 93/23439 lehrt die Trocknung als essentiellen Schritt, um Katalysatoren mit vorteilhaften Eigenschaften zu erhalten. Die getrockneten Katalysatoren des Standes der Technik haben den Nachteil, daß sie selbstentzündlich sind.

Anfeuchten der trockenen Feststoffe, insbesondere der Polymerisationskatalysatoren, führt in der Regel zu unerwünschten Eigenschaften der Katalysatoren, beispielsweise verminderte Polymerisationsaktivität, Bildung von Brocken, welche schwer dosierbar sind.

Aufgabe der vorliegenden Erfindung war es daher Feststoffe, insbesondere rieselfähige Polyolefinkatalysatoren, zur Verfügung zu stellen, die nicht selbstentzündlich sind und deren sonstige relevanten Eigenschaften sich praktisch nicht verschlechtert haben.

Demgemäß wurde die Verwendung eines Feststoffs, der nicht selbstentzündlich ist, enthaltend:
a) mindestens eine Trägerkomponente,
b) mindestens eine für sich selbstentzündliche chemische Verbindung,
c) mindestens eine inerte Flüssigkeit und
d) gegebenenfalls weitere Komponenten, zur katalytischen oder Stöchiometrischen Kohlenstoff-Kohlenstoff-Bindungsverknüpfung oder zur Hydrierung oder zur Trocknung von Fluiden
gefunden. Dieser Feststoff wird im folgenden "erfindungsgemäßer Feststoff" genannt. Weiterhin wurde ein Verfahren zur Herstellung eines erfindungsgemäßen Feststoffs zur vorher genannten Verwendung gefunden, wobei man die Komponenten a) bis d) mischt und anschließend die Komponente c) teilweise entfernt. Ferner wurde ein Verfahren zur Herstellung eines erfindungsgemäßen Feststoffs zur vorher genannten Verwendung gefunden, wobei man die Komponenten a) bis d) mischt, anschließend die Komponente c) praktisch vollständig entfernt und dann eine Komponente c) in der Menge dem trockenen Feststoff wieder zusetzt, daß dieser sich nicht selbst entzündet.

Die Trägerkomponente a) ist breit variierbar. Es kommen generell alle organischen oder anorganischen Festkörper in Frage insbesondere solche, welche porös sind. Gut geeignete anorganischen Trägerkomponenten a) sind beispielsweise partikuläre Oxide oder Salze. Gut geeignete organische Trägerkomponenten a) sind beispielsweise partikuläre Polymere.

Als partikuläres organisches Trägermaterial a) kommen beispielsweise Polyolefine wie Polyethylen, Polypropylen, Poly-1-buten und Polymethyl-1-penten und Copolymere mit den diesen Polymeren zugrundeliegenden Monomeren, weiterhin Polyester, Polyamide, Polyvinylchlorid, Polyacrylate und -methacrylate und Polystyrol in Betracht. Bevorzugt sind jedoch partikuläre anorganische Trägermaterialien a) wie poröse Oxide, z.B. SiO₂, Al₂O₃, MgO, ZrO₂, TiO₂, B₂O₃, CaO, ZnO. Auch Metallhalogenide wie MgCl₂ kommen als Träger in Betracht. Die Trägermaterialien a) weisen vorzugsweise einen Teilchendurchmesser zwischen 1 und 300 µm auf, insbesondere von 30 bis 70 µm. Besonders bevorzugte Träger sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Die für sich selbstentzündliche Komponente b) ist ebenfalls breit variierbar und wird durch ihre Eigenschaft der Selbstentzündlichkeit definiert. Selbstentzündlich wird durch die UN-Empfehlungen Kapitel 14.3 und die Richtlinie 92/69 EWG, A 13, wie in den Beispielen ausführlich beschrieben, definiert. Unter Verbindungen die dieser Anforderung genügen fallen beispielsweise metallorganische Verbindungen, Metallhydride oder Organometallhydride, vornehmlich jene der Gruppen 1, 2, 3, 4, 5, 6, 12, 13, 14 und 15 des Periodensystems der Elemente (Gruppennumerierung nach IUPAC-Empfehlung 1985). Gut geeignete Komponenten b) sind beispielsweise Lithium-Organyle, Aluminium-Organyle, Bor-Organyle. Bevorzugt sind offenkettige oder cyclische Alumoxanverbindungen die nach US-A 4,794,096 durch Umsetzung von Aluminiumtrialkylen mit Wasser erhalten werden können. Sie sind aus 5 bis 30 Struktureinheiten ⁅O-Al(R¹⁆ aufgebaut, die kettenförmig oder ringförmig verbunden sind und wobei die Reste R¹ C₁- bis C₄-Alkylgruppen bedeuten, bevorzugt Methyl- oder Ethylgruppen. Die Alumoxanverbindungen können auch im Gemisch mit anderen Metallalkylen, bevorzugt mit Aluminiumalkylen, vorliegen.

Des weiteren finden Aluminiumorganyle der allgemeinen Formel Al(R')₃ Verwendung, wobei R' Wasserstoff, C₁- bis C₁₀-Alkyl, vorzugsweise C₁- bis C₄- Alkyl, insbesondere Methyl, Ethyl, Butyl bedeutet. Darüberhinaus kann R' auch für Arylalkyl oder Alkylaryl mit jeweils 1 bis 10 C-Atomen im Alkylrest und 6 bis 20 C-Atomen im Arylrest stehen. Weiterhin sind Aluminiumalkyle Al(R')₃ geeignet in denen R' Fluor, Chlor, Brom oder Iod bedeuten kann, mit der Maßgabe, daß mindestens ein Rest R' ein C-organischer Rest oder ein Wasserstoffatom ist. Besonders bevorzugte Verbindungen sind Trimethylaluminium, Triethylaluminium, Triisobutylaluminium, Di-isobutylaluminiumhydrid, Diethylaluminium-chlorid.

Die Komponenten b) können für sich allein oder als Mischungen im erfindungsgemäßen Feststoff eingesetzt werden, wobei die Mischungsverhältnisse nicht kritisch sind.

Das Aufbringen der Komponenten b) geschieht in der Regel durch Tränken des Trägerfeststoffs mit den flüssigen und/oder gelösten Komponenten b). Geeignete Lösungsmittel hierfür sind im allgemeinen solche, welche die Komponente c) bilden.

Die Komponente c) ist eine inerte Flüssigkeit, das heißt eine unter Normalbedingungen flüssige chemische Verbindung, welche unter Normalbedingungen nicht, oder nur sehr langsam, mit der Komponente b) chemisch, unter deren teilweisen oder vollständigen chemischen Umwandlung, im allgemeinen Zersetzung, oder unter ihrer eigenen teilweisen oder vollständigen chemischen Umwandlung, reagiert. Eine teilweise chemische Umwandlung ist im allgemeinen noch nicht gegeben, wenn weniger als ca. 10 mol-%, vorzugsweise 3 mol-%, insbesondere 1 mol-% der eingesetzten Reinsubstanz c) umgewandelt worden sind.

Gut geeignet als Komponente c) sind inerte organische Verbindungen, wie aliphatische, isocyclische oder aromatische Kohlenwasserstoffe. Beispielhaft seien genannt n-Hexan, n-Heptan, n-Oktan, Isododekan, Cyclohexan, Toluol, Ethylbenzol, 1-Hexen, 1-Penten, 1-Hepten, 1-Octen vorzugsweise verwendet man n-Heptan. Selbstverständlich können auch Mischungen oder Isomere der genannten Verbindungen als Komponente c) verwendet werden, insbesondere solche, welche kommerziell angeboten werden, wie EC 180 der Firma Shell oder Isopar der Firma Exxon.

Die Flüssigkeit c)ist in einer solchen Menge in dem erfindungsgemäßen Feststoff aus a) bis c) und gegebenenfalls d) enthalten, daß dieser gerade nicht mehr selbstentzündlich ist jedoch noch rieselfähig ist, das bedeutet praktisch keine grobteiligen Komponenten enthält. Die Menge der Flüssigkeit c) hängt nach gegenwärtigem Kenntnisstand unter anderem von der Leichtigkeit der Selbstentzündlichkeit der Komponente b) ab.

Üblicherweise enthält der erfindungsgemäße Feststoff 10 bis 70 Gew.-%, bezogen auf den c) nicht enthaltenden Feststoff, an c), vorzugsweise 25 bis 60 Gew.-%, insbesondere 30 bis 40 Gew.-% c), bestimmt mit der Methode der Gaschromatographie.

Polymerisationskatalysatoren, vorzugsweise Olefinpolymerisationskatalysatoren auf Basis des erfindungsgemäßen Feststoffs enthalten üblicherweise noch eine Übergangsmetall-Komponente d).

Gut geeignete Übergangsmetallkomponenten d) sind beispielsweise die Halogenide, vorzugsweise die Chloride, oder Alkoxide, vorzugsweise Methoxide, Ethoxide, iso-Propoxide der Übergangsmetalle Titan, Zirconium, Hafnium, Vanadium, Niob, Tantal, Chrom, Molybdän oder Wolfram. Ganz besonders bevorzugte Komponenten d) sind Metallocenkomplexe, mithin Übergangsmetallverbindungen, welche mindestens einen Cyclopentadienylliganden oder mindestens einen, von der Cyclopentadienylstruktureinheit abgeleiteten, Liganden haben.

Als Metallocenkomplexe eigenen sich besonders solche der allgemeinen Formel I 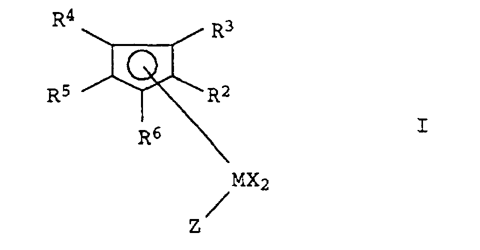 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
- R⁹: C₁- bis C₁₀-Alkyl, C₃- bis C₁₀-Cycloalkyl oder C₆- bis C₁₅-Aryl,
- Z: für X oder 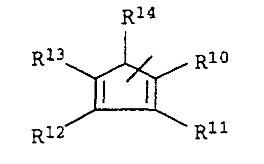 steht,
wobei die Reste
- R¹⁰ bis R¹⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-Abilden, in der
- R¹⁶: 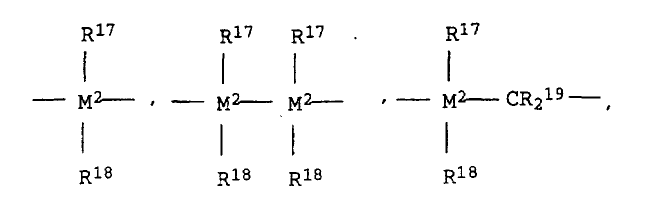 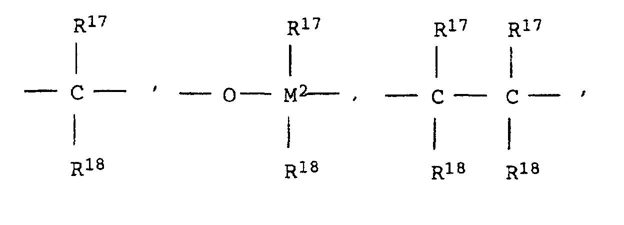 = BR¹⁷, = AlR¹⁷, -Ge-, -Sn-, -O-, -S-, = SO, = SO₂, = NR¹⁷, = CO, = PR¹⁷ oder = P(O)R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: -O-, -S-, 〉NR²⁰ oder 〉PR²⁰ bedeuten, mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶bilden.
Von den Metallocenkomplexen der allgemeinen Formel I sind 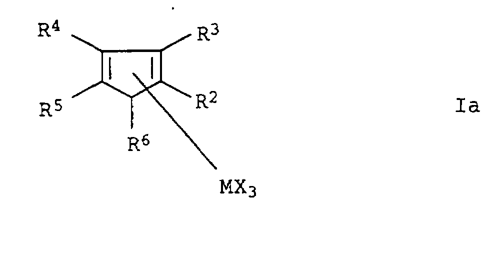 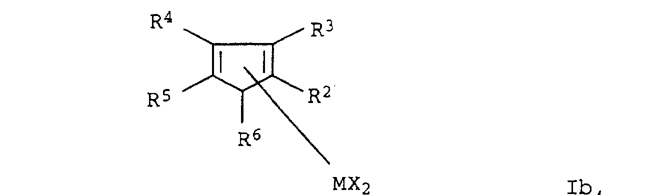 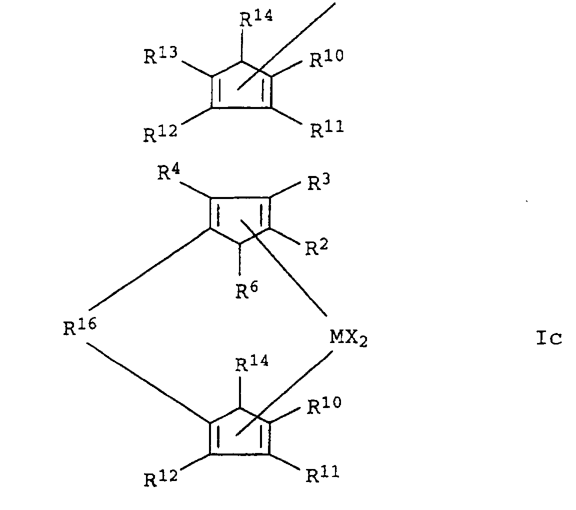 und 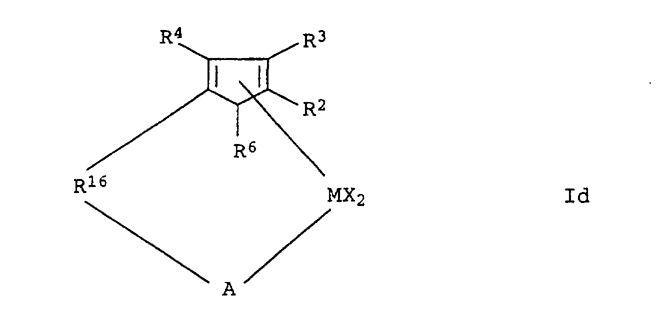 bevorzugt.

Bevorzugt sind solche Übergangsmetallkomplexe, welche zwei, gegebenenfalls miteinander verbrückte, aromatische Ringsysteme als Liganden enthalten, also besonders die Übergangsmetallkomplexe der allgemeinen Formeln Ib und Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹²: die Bedeutung
R⁴ und R¹² C₁- bis C₄-Alkyl
R³ und R¹¹ Wasserstoff
haben oder zwei benachbarte Reste R³ und R⁴ sowie
R¹¹ und R¹² gemeinsam für 4 bis 12 C-Atome aufweisende cyclische Gruppen stehen,
- R¹⁶: für 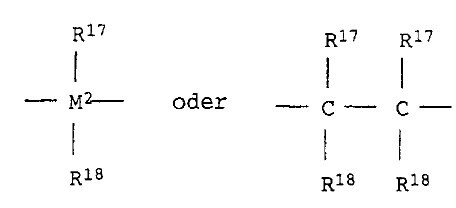 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis(2-ethylbenzindenyl)zirkoniumdichlorid, und Dimethylsilandiylbis(-2-methylindenyl)-hafniumdichlorid sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁶: für 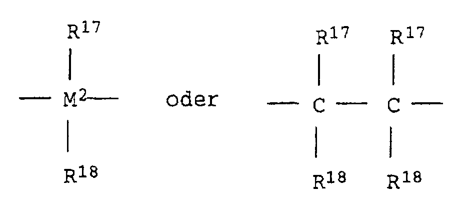 steht,
- A: für ―O― , ―S― , 〉NR²⁰
und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Der erfindungsgemäße Feststoff, insbesondere die auf ihm basierenden Polymerisationskatalysatoren, können weiterhin als Komponente d) eine metalloceniumionenbildende Verbindung enthalten. Diese kann entweder ausgewählt werden aus der Gruppe der Verbindungen b), vorzugsweise Aluminoxane, insbesondere Methylaluminoxan, oder aber es können welche, gegebenenfalls zusätzlich zu b), aus der Gruppe der folgenden Verbindungen ausgewählt werden.

Geeignete metalloceniumionen-bildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M³X¹X²X³ II

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂...Q_{z}]^{d+} III

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Geeignete Verfahren zur Herstellung des Feststoffs sind die folgenden.

Trägerfeststoff a), vorzugsweise ein poröses anorganisches Oxid, insbesondere Silicagel, wird in der inerten Flüssigkeit c), vorzugsweise ein aliphatischer, isocyclischer oder aromatischer Kohlenwasserstoff, insbesondere Heptan und/oder Toluol, suspendiert. Hierzu gibt man dann die Komponente b), vorzugsweise eine metallorganische Verbindung der Gruppe 3 des Periodensystems der Elemente oder ein Aluminoxan, wie voranstehend definiert, vorzugsweise Methylaluminoxan oder aber eine Mischung aus den Komponenten b) und d), die auch chemisch miteinander reagieren können. Die Komponenten b) und gegebenenfalls d) können auch gelöst, vorzugsweise in inerten organischen Lösungsmitteln, wie aliphatischen, isocyclischen Kohlenwasserstoffen oder aromatischen Kohlenwasserstoffen, also n-Hexan, n-Heptan, Isododekan, Toluol, oder Ethylbenzol vorliegen. Die Temperaturen für diese Umsetzung sind nicht kritisch. Üblicherweise werden die Komponenten a), b) und c) und gegebenenfalls d) im Temperaturbereich von -70 bis 120°C vorzugsweise von 0 bis 50°C umgesetzt.

Anschließend kann das Lösungsmittel c) praktisch vollständig entfernt werden und der verbleibende Feststoff, üblicherweise bei einer Temperatur im Bereich von 20 bis 120°C, getrocknet und mit einer bestimmten Menge der Komponente c) versetzt werden (Variante A) oder aber die Menge der Komponente c) im Feststoff kann durch nicht-vollständiges Entfernen auf den gewünschten Wert eingestellt werden (Variante B). Die in Variante A zugesetzte Flüssigkeit c) kann, muß aber nicht, mit der ursprünglich in der Mischung vorhandenen Flüssigkeit c) chemisch identisch sein.

Ein gut geeignetes Verfahren zur Herstellung eines nicht selbstentzündlichen, festen Polymerisationskatalysators, vorzugsweise für die Olefinpolymerisation, ist das folgende.

Trägerfeststoff a), vorzugsweise ein poröses anorganisches Oxid, insbesondere Silicagel, wird in der inerten Flüssigkeit c), vorzugsweise ein aliphatischer, isocyclischer oder aromatischer Kohlenwasserstoff, insbesondere Heptan und/oder Toluol, suspendiert. Hierzu gibt man dann die Komponente b), vorzugsweise eine metallorganische Verbindung der Gruppe 3 des Periodensystems der Elemente, wie Tri-C₁-bis C₁₀-alkylaluminiumverbindungen, insbesondere Trimethylaluminium, oder ein Aluminoxan, wie voranstehend definiert, vorzugsweise Methylaluminoxan. Die Komponente b) kann auch gelöst, vorzugsweise in inerten organischen Lösungsmitteln, wie aliphatischen, isocyclischen Kohlenwasserstoffen oder aromatischen Kohlenwasserstoffen, also n-Hexan, n-Heptan, Isododekan, Toluol, oder Ethylbenzol vorliegen. Die Temperaturen für diese Umsetzung sind nicht kritisch. Üblicherweise werden die Komponenten a), b) und c) im Temperaturbereich von -70 bis 120°C, vorzugsweise von 0 bis 50°C umgesetzt. Üblicherweise wird nach diesem Tränkvorgang das Lösungsmittel praktisch vollständig entfernt und der verbleibenden Feststoff getrocknet, vorzugsweise bei einer Temperatur im Bereich von 20 bis 120°C, insbesondere bei einer Temperatur im Bereich von 40 bis 80°C. Die Trocknungsdauer ist im allgemeinen nicht kritisch und liegt in der Regel im Bereich von 0,1 bis 24 Stunden, je nach Ansatzgröße.

Der so erhältliche Feststoff wird dann üblicherweise mit einer Lösung des Metallocens, vorzugsweise der Biscyclopentadienylverbindungen Ib, Ic wie voranstehend definiert, insbesondere Bis(n-butylcyclopentadienyl)zirconiumdichlorid, Bis(iso-butylcyclopentadienyl)zirconiumdichlorid, Dimethylsilandiylbis(indenyl)-zirconiumdichlorid, Dimethylsilandiylbis(2-methylbenzindenyl)-zirconiumdichlorid und der metalloceniumbildenden Verbindung, vorzugsweise Methylaluminoxan, vermischt. Anschließend wird üblicherweise das Lösungsmittel c) praktisch vollständig entfernt, der verbleibende Feststoff getrocknet, vorzugsweise bei einer Temperatur im Bereich von 20 bis 120°C, insbesondere 40 bis 80°C, und mit einer bestimmten Menge der Komponente c) versetzt (Variante A) oder aber die Menge der Komponente c) im erfindungsgemäßen Feststoff kann durch nicht-vollständiges Entfernen der Komponente c) auf den gewünschten Wert eingestellt werden (Variante B). Die in Variante A zugesetzte Flüssigkeit c) kann, muß aber nicht, mit der ursprünglich in der Mischung vorhandenen Flüssigkeit c) chemisch identisch sein.

Die so erhältlichen festen Katalysatoren eignen sich gut zur Polymerisation von C₂- bis C₁₂-Alk-1-enen bei Temperaturen im Bereich von -50 bis 300°C und Drücken im Bereich von 0,5 bis 5000 bar.

Von den C₂- bis C₁₂-Alk-1-enen sind Ethylen, Propen, But-1-en, Pent-1-en, 4-Methyl-pent-1-en, Hex-1-en, Hept-1-en oder Oct-1-en, sowie Gemische aus diesen C₂- bis C₁₂-Alk-1-enen bevorzugt. Besonders bevorzugt sind Homo- oder Copolymerisate des Propens, wobei der Anteil an Propen in den Copolymerisaten mindestens 50 mol-% beträgt. Bei den Copolymerisaten des Propens sind diejenigen bevorzugt, die als weitere Monomere Ethylen oder But-1-en oder deren Mischungen enthalten. Bevorzugte Ethylen-Polymerisate sind Copolymerisate mit einem Anteil von 50 bis 99,9 mol-% Ethylen und 0,1 bis 50 mol-% eines C₃- bis C₁₀-Alk-1-ens, beispielsweise Propen, 1-Buten, 1-Hexen, 1-Octen, 1-Decen oder einer Mischung dieser C₃- bis C₁₀-Alk-1-ene, wobei die Mengenverhältnisse in der Mischung nicht kritisch sind.

Das Verfahren zur Herstellung von Polymerisaten wird üblicherweise bei Temperaturen im Bereich von -50 bis 300°C, vorzugsweise im Bereich von 0 bis 150°C und bei Drücken im Bereich von 0,5 bis 5000 bar, vorzugsweise im Bereich von 1 bis 80 bar durchgeführt.

Die Polymerisation kann in Lösung, in Suspension, in flüssigen Monomeren oder in der Gasphase durchgeführt werden. Bevorzugt erfolgt die Polymerisation in flüssigen Monomeren, in Suspension oder in der Gasphase, wobei die gerührte Gasphase oder das Gasphasenwirbelschichtverfahren bevorzugt sind.

Das Verfahren kann kontinuierlich oder diskontinuierlich durchgeführt werden. Geeignete Reaktoren sind u.a. kontinuierlich betriebene Rührkessel oder Wirbelschichtreaktoren, wobei man gegebenenfalls auch eine Reihe von mehreren hintereinander geschalteten Reaktoren verwenden kann (Reaktorkaskade).

Der Feststoff zeichnet sich durch seine Nicht-Selbstentzündlichkeit aus, welche nach den UN-Empfehlungen Kapitel 14.3 und der Richtlinie 92/69 EWG, A 13 definiert wurde. Hiernach wird die Lagerung kleiner Mengen des Feststoffs an Luft untersucht. Hat er sich nicht innerhalb von fünf Minuten entzündet, wird er als nicht-selbstentzündlich eingestuft.

Der Feststoff, vorzugsweise einer der aus den Komponenten a), b) und c) besteht, kann zur Trocknung von Fluiden eingesetzt werden. Als Fluide seien genannt Monomere, wie die bereits definierten C₂ -bis C₁₂-Alk-1-ene, beispielsweise Ethylen, Propylen, 1-Buten, 1-Hexen; ferner seien genannt organische Lösungsmittel, wie jene, welche die Komponente c) bilden, beispielsweise n-Heptan, Toluol. Als gasförmige Fluide seien die Edelgase, vorzugsweise Argon, ferner Stickstoff und gasförmige Kohlenwasserstoffe, beispielsweise Propan, Butan genannt.

### Beispiele

### Beispiel 1

### Herstellung eines trockenen, geträgerten Katalysators

In einem trockenem und mit Stickstoff gespülten Reaktor wurden 12,1 kg Kieselgel (Fa. Grace, SG 332, 50 µm) in 90 1 Heptan suspendiert und auf 20°C thermostatisiert. Innerhalb von 90 min wurden 33,9 1 einer 1 molaren Lösung von Trimethylaluminium (TMA) in Heptan zugegeben, wobei eine Temperatur von 40°C nicht überschritten wurde. Nach Beendigung der TMA-Zugabe wurde weitere 4 h gerührt. Die Suspension wurde abfiltriert und zweimal mit je 20 1 Heptan gewaschen. Nach Trocknen bei 50°C verblieb der modifizierte Träger als rieselfähiges Pulver mit einem Aluminiumgehalt von 12 Gew.-%.

Zu einer Lösung von 131,3 g Bis(n-butylcyclopentadienyl)-zirkoniumdichlorid in 56 1 1,53 molarer Methylalumoxan-Lösung in Toluol wurde bei 20°C nach 20-minütigem Rühren 12,6 kg des modifizierten Trägers gegeben und weitere 45 min geruhrt. Danach wurde abfiltriert und anschließend mit zweimal je 20 1 Heptan gewaschen. Nach der Trocknung bei 50°C erhielt man ein rieselfähiges Pulver (15,1 kg) mit einem Aluminiumgehalt von 12,7 Gew.-% und einem Zirkongehalt von 0,078 Gew.-%. Demnach betrug das molare Verhältnis Al : Zr insgesamt 550 : 1.

### Beispiel 2

### Herstellung von Heptan-feuchten Katalysatoren

a) durch Zugabe von Heptan
   10 g eines nach Beispiel 1 hergestellten Katalysators wurde unter Rühren mit der entsprechenden Menge Heptan versetzt, siehe Tabelle 1. Anschließend wurde noch für 2 h gerührt.
b) durch gezieltes Trocknen des Katalysators
   Es wurde wie in Beispiel 1 gearbeitet, mit dem Unterschied, daß der Katalysator nicht vollständig, sondern bis zu einem Heptan-Gehalt von 38 Gew.-% getrocknet wurde.

Der Heptangehalt des geträgerten Katalysators wurde bestimmt, indem die Probe mit Toluol vermischt, mit Ethylbenzol als internem Standard versetzt und unter Eiskühlung mit Methanol zersetzt wurde. Anschließend erfolgte die gaschromatographische Bestimmung von Heptan.

### Beispiel 3

### Versuche zur Bestimmung der Entflammbarkeit

Ca. 2 g des geträgerten Katalysators, siehe Tabelle 1, wurden schnell an ein senkrecht in einem Becherglas stehendes Thermometer geschüttet. Es wurde die Temperaturänderung bei der Zersetzung des Katalysators beobachtet; die Höchsttemperatur wurde nach ca. 1 min erreicht (Tabelle 1).

**Tabelle 1:**

| Temperaturänderung bei der Zersetzung des Trägerkatalysators | | | |
|---|---|---|---|
| Heptangehalt [in Gew.-%] | Anfangstemp. [°C] | maximale Temp. [°C] | Temp.differenz [°C] |
| 0 | 23,8 | 85,5 | 61,7 |
| 9 | 24,7 | 52,1 | 27,4 |
| 17 | 22,1 | 47,7 | 25,6 |
| 23 | 22,4 | 37,3 | 14,9 |
| 38 | 21,5 | 33,0 | 11,5 |

### Beispiel 4

Versuche zur Einstufung des Katalysators mit einem Heptangehalt von 38 Gew.-% nach den UN-Empfehlungen, Kapitel 14.3 und der Richtlinie 92/69/EWG, A 13, sowie den Empfehlungen des "UN-committees of experts on the transport of dangerous goods":
a) Prüfung auf Selbstentzündlichkeit
   Der Katalysator entzündete sich nicht in kleinen Mengen innerhalb von fünf Minuten an der Luft. Er ist damit kein pyrophorer Stoff.
b) Prüfung auf Selbstentzündung im Drahtkorb nach UNO.
   Der Katalysator wurde jeweils in kubischen Drahtkörben von a) 10 cm und b) 2,5 cm Kantenlänge im Umluft-Trockenschrank bei 140°C gelagert. Er entzündete sich bei beiden Versuchen.
   Der Katalysator wurde aufgrund der Testergebnisse 4a und 4b in Klasse 4.2, gemäß den Empfehlungen des UN-committees of experts on the transport of dangerous goods", eingestuft und der Verpackungsklasse II zugeordnet. Damit ist der Lufttransport erlaubt.

### Vergleichsbeispiel 4V

Versuche zur Einstufung des Katalysators mit einem Heptangehalt von 0 Gew.-% nach den UN-Empfehlungen, Kapitel 14.3 der Richtlinie 92/69/EWG, A 13, und den Empfehlungen des "UN-committees of experts on the transport of dangerous goods"

### Prüfung auf Selbstentzündlichkeit

Der Katalysator entzündete sich in kleinen Mengen innerhalb von fünf Minuten an der Luft. Er ist damit ein pyrophorer Stoff. Der Lufttransport ist daher verboten.

### Beispiel 5

In einen gerührten 10-1-Stahlautoklaven wurden nach sorgfältigem Spülen mit Stickstoff und Temperieren auf die Polymerisationstemperatur von 70°C 4,5 1 iso-Butan vorgelegt. Dann wurden 567 mg geträgerter Katalysator mit einem Heptangehalt von 38 Gew.-% (aus Beispiel 2) mit weiteren 0,5 1 iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Es fielen 1230 g Polymerisat in Form eines gut rieselfähigen Grießes an. Die Versuchsdaten sind in Tabelle 2 aufgeführt.

### Vergleichsbeispiel 5V

Es wurde wie in Beispiel 5 gearbeitet, mit dem Unterschied, daß 402 mg geträgerter Katalysator mit einem Heptangehalt von 0 Gew.-% (aus Beispiel 1) eingesetzt wurde. Die Ausbeute betrug: 1380 g. Weitere Daten siehe Tabelle 2.

### Beispiele 6 bis 8

Es wurde wie in Beispiel 5 gearbeitet mit dem Unterschied, daß geträgerte Katalysatoren mit Heptangehalten von 9 bis 23 Gew.-% eingesetzt wurden. Die Daten sind in Tabelle 2 aufgeführt.

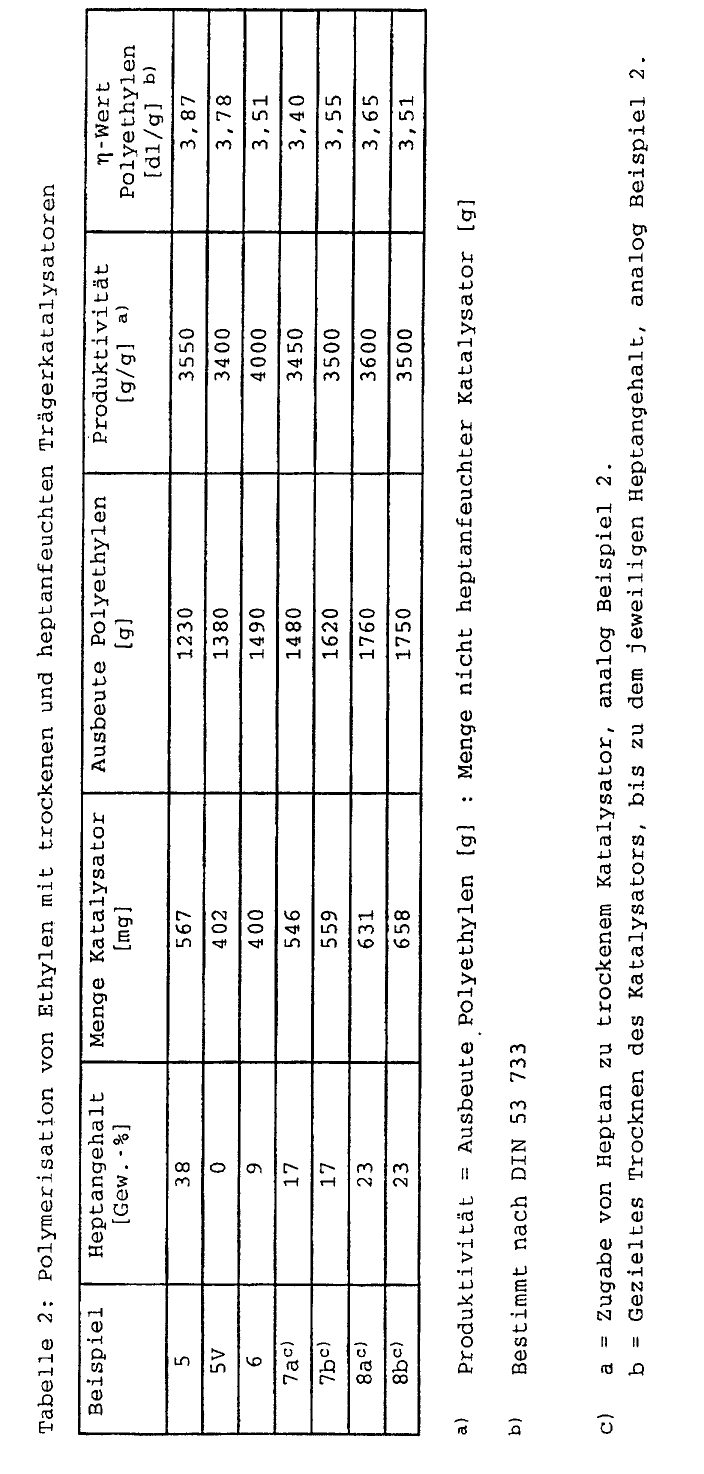

## Patentansprüche

1. Verwendung eines Feststoffs, der nicht selbstentzündlich ist, enthaltend:
a) mindestens eine Trägerkomponente,
b) mindestens eine, für sich selbstentzündliche, chemische Verbindung,
c) mindestens eine inerte Flüssigkeit und
d) gegebenenfalls weitere Komponenten,
zur katalytischen oder stöchiometrischen Kohlenstoff-Kohlenstoff-Bindungsverknüpfung oder zur Hydrierung oder zur Trocknung von Fluiden.

2. Verwendung eines Feststoffs nach Anspruch 1, wobei der Feststoff rieselfähig ist.

3. Verwendung eines Feststoffs nach den Ansprüchen 1 bis 2, wobei die Komponente a) ausgewählt wird aus der Gruppe der anorganischen Salze, anorganischen Oxide und der organischen Polymere.

4. Verwendung eines Feststoffs nach den Ansprüchen 1 bis 3, wobei die Komponente b) ausgewählt wird aus der Gruppe der metallorganischen Verbindungen und der Hydride.

5. Verwendung eines Feststoffs nach den Ansprüchen 1 bis 4, wobei die Komponente c) ausgewählt wird aus der Gruppe der inerten organischen Lösungsmittel.

6. Verwendung eines Feststoffs nach den Ansprüchen 1 bis 5, wobei die Komponente d) ausgewählt wird aus der Gruppe der Übergangsmetallkomplexe.

7. Verwendung eines Feststoffs nach den Ansprüchen 1 bis 6, wobei die Komponente d) ausgewählt wird aus der Gruppe der Metallocenverbindungen.

8. Verwendung eines Feststoffs nach den Ansprüchen 1 bis 7 zur Polymerisation von C₂- bis C₁₂-Alk-1-enen.

9. Verfahren zur Herstellung eines Feststoffs, der gemäß den Ansprüchen 1 bis 8 verwendet wird, wobei man die Komponenten
a) bis d) mischt und anschließend die Komponente c) teilweise entfernt.

10. Verfahren zur Herstellung eines Feststoffs, der gemäß den Ansprüchen 1 bis 8, verwendet wird, wobei man die Komponenten
a) bis d) mischt, anschließend die Komponente c) praktisch vollständig entfernt und dann eine Komponente c) in der Menge dem trockenen Feststoff wieder zusetzt, daß dieser sich nicht selbst entzündet.

## Claims

1. The use of a solid which is not self-igniting, comprising
a) at least one support component,
b) at least one chemical compound which per se is self-igniting,
c) at least one inert liquid, and
d) further components if desired,
for catalytic or stoichiometric carbon-carbon bond linkage or for hydrogenation or for drying of fluids.

2. The use of a solid as claimed in claim 1, where the solid is free-flowing.

3. The use of a solid as claimed in claims 1 to 2, where component a) is selected from the group consisting of inorganic salts, inorganic oxides and organic polymers.

4. The use of a solid as claimed in claims 1 to 3, where component b) is selected from the group consisting of organometallic compounds and hydrides.

5. The use of a solid as claimed in claims 1 to 4, where component c) is selected from the group consisting of inert organic solvents.

6. The use of a solid as claimed in claims 1 to 5, where component d) is selected from the group consisting of transition metal complexes.

7. The use of a solid as claimed in claims 1 to 6, where component d) is selected from the group consisting of metallocene compounds.

8. The use of a solid as claimed in claims 1 to 7 for polymerizing C₂ to C₁₂ alk-1-enes.

9. A process for preparing a solid used as claimed in claims 1 to 8, where components a) to d) are mixed and subsequently some of component c) is removed.

10. A process for preparing a solid used as claimed in claims 1 to 8, where components a) to d) are mixed, then virtually all of component c) is removed, and subsequently a component c) is added to the dry solid again in an amount such that this solid does not self-ignite.

## Revendications

1. Utilisation d'une matière solide non-auto-inflammable, contenant
a) au moins un composant support,
b) au moins un composé chimique auto-inflammable en soi,
c) au moins un liquide inerte, et
d) éventuellement d'autres composants,
pour assurer par voie catalytique ou stoechiométrique une liaison carbone-carbone, ou pour hydrogéner ou sécher des fluides.

2. Utilisation d'une matière solide selon la revendication 1, pour laquelle la matière solide est à écoulement libre.

3. Utilisation d'une matière solide selon les revendications 1 à 2, pour laquelle le composant a) est choisi dans l'ensemble comprenant les sels inorganiques, les oxydes inorganiques et les polymères organiques.

4. Utilisation d'une matière solide selon les revendications 1 à 3, pour laquelle le composant b) est choisi dans l'ensemble comprenant les composés organométalliques et les hydrures.

5. Utilisation d'une matière solide selon les revendications 1 à 4, pour laquelle le composant c) est choisi dans l'ensemble comprenant les solvants organiques inertes.

6. Utilisation d'une matière solide selon les revendications 1 à 5, pour laquelle le composant d) est choisi dans l'ensemble comprenant les complexes de métaux de transition.

7. Utilisation d'une matière solide selon les revendications 1 à 6, pour laquelle le composant d) est choisi dans l'ensemble comprenant les métallocènes.

8. Utilisation d'une matière solide selon les revendications 1 à 7 pour la polymérisation d'alcènes-1 en C₂ à C₁₂.

9. Procédé de préparation d'une matière solide utilisée selon les revendications 1 à 8, dans lequel on mélange les composants a) à d), puis on élimine partiellement le composant c).

10. Procédé de préparation d'une matière solide qui est utilisée selon les revendications 1 à 8, dans lequel on mélange les composants a) à d), puis on élimine pour ainsi dire complètement le composant c), puis on rajoute un composant c) à la matière solide sèche, en une quantité pour laquelle cette dernière ne va pas subir d'inflammation spontanée.
